(19) **Europäisches Patentamt**
**European Patent Office**
**Office européen des brevets**

(11) **EP 3 522 476 B1**

(12) **EUROPEAN PATENT SPECIFICATION**

(45) Date of publication and mention
of the grant of the patent:
**29.09.2021 Bulletin 2021/39**

(51) Int Cl.:
*H04L 5/00* (2006.01)　　*H04W 72/04* (2009.01)
*H04L 29/06* (2006.01)　　*H04L 27/26* (2006.01)
*H04J 11/00* (2006.01)　　*H04L 5/14* (2006.01)

(21) Application number: **17866659.0**

(22) Date of filing: **20.10.2017**

(86) International application number:
**PCT/CN2017/107097**

(87) International publication number:
**WO 2018/082457 (11.05.2018 Gazette 2018/19)**

(54) **METHOD AND APPARATUS FOR CONFIGURING REFERENCE SIGNAL**

VERFAHREN UND VORRICHTUNG ZUM KONFIGURIEREN EINES REFERENZSIGNALS

PROCÉDÉ ET APPAREIL DE CONFIGURATION DE SIGNAL DE RÉFÉRENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2016 CN 201610959468**

(43) Date of publication of application:
**07.08.2019 Bulletin 2019/32**

(73) Proprietor: **Huawei Technologies Co., Ltd.
Longgang District
Shenzhen, Guangdong 518129 (CN)**

(72) Inventors:
• **WU, Ming**
**Shenzhen, Guangdong 518129 (CN)**
• **GONG, Zhengwei**
**Shenzhen, Guangdong 518129 (CN)**
• **TANG, Hao**
**Shenzhen, Guangdong 518129 (CN)**
• **MA, Xiaojun**
**Shenzhen, Guangdong 518129 (CN)**

(74) Representative: **Gill Jennings & Every LLP
The Broadgate Tower
20 Primrose Street
London EC2A 2ES (GB)**

(56) References cited:
**EP-A2- 2 747 320      CN-A- 101 877 865
CN-A- 102 130 875**

• **ERICSSON ET AL: "Flexible DM-RS
Configuration for Dynamic Inter-Point
Coordination", 3GPP DRAFT; R1-120787_DL_RS,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, vol. RAN
WG1, no. Dresden, Germany; 20120206 -
20120210, 1 February 2012 (2012-02-01),
XP050563294,**
• **Intel Corporation: "Discussion on CSI-RS design
for NR", 3GPP Draft; R1-1609528, 1 October 2016
(2016-10-01), XP051159598,**

## Description

This application claims priority to Chinese Patent Application No. 201610959468.2, filed with the Chinese Patent Office on November 3, 2016 and entitled "REFERENCE SIGNAL CONFIGURATION METHOD AND APPARATUS".

## TECHNICAL FIELD

This application relates to the field of communications technologies, and more specifically, to a reference signal configuration method and apparatus.

## BACKGROUND

In a Long Term Evolution (Long Term Evolution, LTE) system, data detection and demodulation are performed based on a reference signal. A receive end obtains a reference signal base sequence by using configuration information or predefined information; performs channel estimation based on the sequence and a received reference signal, to obtain a channel of data corresponding to the reference signal; and performs detection and demodulation on the data based on the channel.

In the LTE system, a same time unit on a same frequency band has a same transmission feature. For example, a transmission feature of a same time unit on a same frequency band is uplink, or is downlink. All the reference signal base sequence, and a mapping manner and configuration information of the reference signal are determined based on a predefined system parameter. However, in a new-generation communications system, for example, a future 5G communications system, to further increase a system throughput, a transmission mode, such as dynamic time division duplex (Time Division Duplex, TDD), flexible duplex, or full duplex transmission, may be introduced. To be specific, uplink transmission and downlink transmission may be simultaneously performed in different cells or in one cell. In addition, the uplink transmission and the downlink transmission are performed on a same frequency band. In this case, fixed reference signal configuration in LTE can no longer meet a requirement of the new system. For example, a full duplex method causes inter-cell and intra-cell uplink/downlink interference. For another example, a fixed reference signal mapping manner and a fixed manner for determining a reference signal base sequence in LTE can no longer meet a requirement of the future 5G communications system.

Under this background, a new reference signal design solution needs to be urgently proposed to adapt to a future communications system. Ericsson et al: "Flexible DM-RS Configuration for Dynamic Inter-Point Coordination", 3GGP R1-120787, 1 February 2012 discloses a reference signal configuration method involving determining configuration information of a DM-RS reference signal based on a first parameter comprising a transmission feature of a slot number or cell ID or SCID and generating the DM-RS reference signal.

## SUMMARY

Embodiments of this application provide a reference signal configuration method and apparatus, so as to provide a new reference signal design for a communications system. The invention is defined in the appended claims.

## BRIEF DESCRIPTION OF DRAWINGS

FIG. 1 is a schematic diagram of an application scenario;
FIG. 2 is a schematic flowchart of a reference signal configuration method according to an embodiment of this application;
FIG. 3 is a schematic diagram of an example according to an embodiment of this application;
FIG. 4 is a schematic diagram of another example according to an embodiment of this application;
FIG. 5 is a schematic block diagram of a reference signal configuration apparatus according to an embodiment of this application; and
FIG. 6 is a structural diagram of a reference signal configuration apparatus according to another embodiment of this application.

## DESCRIPTION OF EMBODIMENTS

It should be understood that the technical solutions in the embodiments of this application may be applied to various communications systems, for example, a Long Term Evolution (Long Term Evolution, LTE) system, an LTE frequency division duplex (Frequency Division Duplex, FDD) system, an LTE time division duplex (Time Division Duplex, TDD) system, the Universal Mobile Telecommunications System (Universal Mobile Telecommunication System, UMTS), a Long Term Evolution Advanced (Advanced long term evolution, LTE-A) system, the Universal Mobile Telecommunications System (Universal Mobile Telecommunication System, UMTS), and a future 5G communications system, such as a New Radio (New Radio, NR) radio system.

It should be further understood that, in the embodiments of this application, a terminal device may communicate with one or more core networks through a radio access network (Radio Access Network, RAN). The terminal device may be referred to as an access terminal, a terminal device, a subscriber unit, a subscriber station, a mobile station, a mobile station, a remote station, a remote terminal, a mobile terminal, a subscriber terminal, a terminal, a wireless communications device, a user agent, or a user apparatus. User equipment may be a cellular phone, a cordless telephone set, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, or a terminal device in a future 5G network.

It should be further understood that, in the embodiments of this application, a network device may be configured to communicate with user equipment. The network device may be a base transceiver station (Base Transceiver Station, BTS) in a GSM system or a CDMA system, may be a NodeB (NodeB, NB) in a WCDMA system, or may be an evolved NodeB (Evolutional Node B, eNB or eNodeB) in an LTE system. Alternatively, the network device may be a relay station, an access point, an in-vehicle device, a wearable device, a base station device in a future 5G network, or the like.

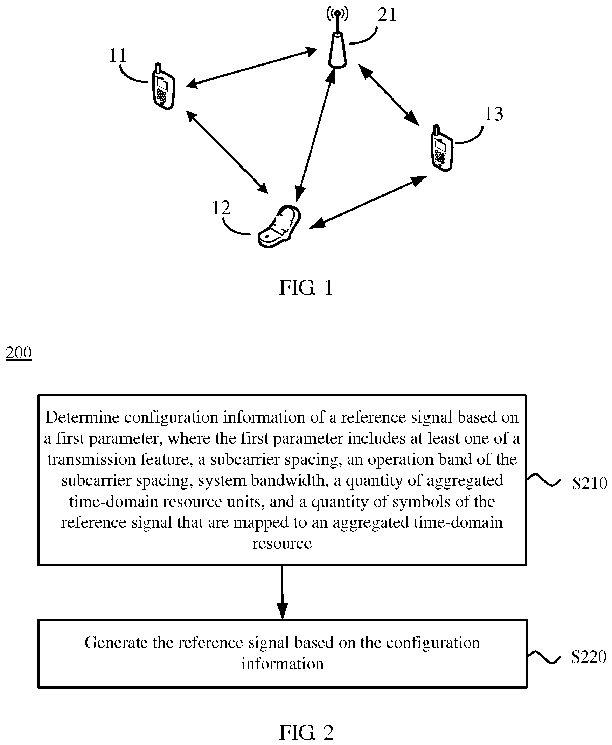

FIG. 1 is a schematic diagram of a scenario. It should be understood that, for ease of understanding, the scenario in FIG. 1 is introduced herein as an example for description, but does not constitute a limitation on the embodiments of this application. FIG 1 shows a terminal device 11, a terminal device 12, a terminal device 13, and a base station 21.

As shown in FIG. 1, the terminal device 11 may communicate with the base station 21, the terminal device 12 may communicate with the base station 21, and the terminal device 13 communicates with the base station 21. Alternatively, the terminal device 12 may also communicate with the terminal device 11. Alternatively, in another case, the terminal device 13 communicates with the base station 12.

In FIG. 1, when data is transmitted between a terminal device and the base station, data detection and demodulation are performed based on a reference signal. The terminal device needs to obtain a reference signal base sequence; performs channel estimation based on the reference signal base sequence and a received reference signal, to obtain a channel of data corresponding to the reference signal; and performs detection and demodulation on the data based on the channel. Alternatively, when data is transmitted between terminal devices, data detection and demodulation are also performed based on a reference signal.

In a future communications system, a transmission mode, such as dynamic TDD, flexible duplex, or full duplex, may be introduced. To be specific, uplink transmission and downlink transmission may be simultaneously performed in different cells or in one cell (the uplink transmission and the downlink transmission are performed on a same frequency band). This causes inter-cell and intra-cell uplink/downlink interference. For example, for a demodulation reference signal (Demodulation Reference Signal, DMRS), if a same DMRS sequence is used for uplink transmission and downlink transmission, an uplink DMRS and a downlink DMRS may be mapped to a same time-domain location. As a result, the uplink DMRS cannot be distinguished from the downlink DMRS, severe interference occurs, and channel estimation performance is affected. In addition, more new service types may appear in a future NR system or 5G system, for example, an ultra-reliable and low latency communications (Ultra Reliable & Low Latency Communication, URLLC) service, a mobile broadband (Mobile Broadband, MBB) service, and a machine type communication (Machine Type Communication, MTC) service. These new service types have different requirements for system parameters such as a subcarrier spacing, a symbol length, a cyclic prefix length, and a bandwidth configuration.

Therefore, a single reference signal design method in LTE can no longer meet a configuration requirement of a future communications system. For example, in an LTE system, no in-depth research is conducted on a reference signal design in a multiple access mode and/or in a case in which a plurality of subcarrier spacings coexist.

Based on these problems, in the embodiments of this application, an attempt is made to introduce a "first parameter", and determine configuration information of a reference signal based on the first parameter, where the first parameter may include at least one of a transmission feature, an operating band (operation band) corresponding to a subcarrier spacing, system bandwidth, a quantity of aggregated time-domain resource units, and a quantity of symbols that are in the aggregated time-domain resource units and to which the reference signal is mapped, so as to obtain a new reference signal design, and meet a configuration requirement of a communications system (features of the communications system are coexistence of a plurality of system parameters, a multiple access mode, and coexistence of a plurality of services).

FIG 2 is a schematic flowchart of a reference signal configuration method 200 according to an embodiment of this application. The method may be performed by a receive-end device. The receive-end device may be a terminal device (for example, any terminal device in FIG. 1) or a network device (for example, the base station 21 in FIG. 1). As shown in FIG. 2, the method 200 includes the following steps.

S210: Determine configuration information of a reference signal based on a first parameter, where the first parameter includes at least one of a transmission feature, a subcarrier spacing, an operating band of the subcarrier spacing, system bandwidth, a quantity of aggregated time-domain resource units, and a quantity of symbols that are in aggregated time-domain resources and to which the reference signal is mapped.

S220: Generate the reference signal based on the configuration information.

Specifically, the receive-end device may determine the configuration information of the reference signal based on the first parameter, instead of using only inherent configuration information related to a reference signal in LTE. The first parameter may include at least one of the transmission feature, the subcarrier spacing, the operating band of the subcarrier spacing, the system bandwidth, the quantity of aggregated time-domain resource units, and the quantity of symbols that are in the aggregated time-domain resources and to which the reference signal is mapped. In this way, the receive-end device may generate a base sequence of the reference signal based on the configuration information of the reference signal, and determine reference signal mapping, to obtain a new reference signal design and meet a requirement of a new-generation communications system.

The following describes in detail related embodiments in which the first parameter includes different parameters.

The first parameter comprises the transmission feature, and the transmission feature is determined based on a transmission identifier of the reference signal.

S210 includes:

determining a base sequence of the reference signal based on the transmission feature.

Specifically, the receive-end device determines the base sequence of the reference signal based on a transmission feature specifically a transmission direction identifier, where the transmission direction identifier is used to identify a transmission direction of the reference signal) of a transmission link. For example, the transmission feature may be determined according to at least one of the following manners: a sending device of the reference signal, a receiving device of the reference signal, and a transmission mode of the reference signal.

The transmission direction may include at least one of the following: a transmission direction between a base station and user equipment, a transmission direction between user equipments, and a transmission direction between a base station and a relay station.

For example, the transmission direction identifier may identify the transmission direction of the reference signal as uplink transmission, downlink transmission, a sideline transmission direction, or a backhaul transmission direction. Sidelink refers to device-to-device (Device to Device, D2D) or inter-device (for example, UE-UE communication) communication. Backhaul may be a transmission loop between a relay and a base station.

Herein, in a new communications system, a transmission mode, such as TDD, flexible duplex, or full duplex, may be introduced, causing uplink/downlink interference. Therefore, in this embodiment of this application, during determining of the base sequence of the reference signal, the transmission feature is added to change a scrambling manner of the reference signal, so as to reduce interference between uplink and downlink reference channels.

The following gives an example about how to calculate the base sequence of the reference signal based on the transmission feature.

The determining a base sequence of the reference signal based on the transmission feature includes:

determining an initialization value of the base sequence of the reference signal based on the transmission feature; and generating the base sequence of the reference signal based on the initialization value of the base sequence of the reference signal.

Specifically, the initialization value of the base sequence of the reference signal may be first determined based on the following formula:

$$c_{\text{init}} = X + bn_{TRID}$$

where $C_{\text{init}}$ represents the initialization value of the base sequence of the reference signal, b is a preset value, $n_{TRID}$ represents the transmission feature, and a value of $X$ may be the same as or different from that stipulated in an LTE communications protocol.

Then the base sequence of the reference signal is generated based on the initialization value of the base sequence of the reference signal.

For example, a value corresponding to the transmission feature may be predefined in a communications system. Specifically, a correspondence between the transmission feature and the transmission direction identifier is predefined. Specifically, the value $n_{TRID}$ (used to represent an identifier value corresponding to the transmission feature) corresponding to the transmission feature is added to the formula for calculating the initialization value of the base sequence of the reference signal. For example, refer to Table 1.

**Table 1 Table of a correspondence between $n_{TRID}$ values and transmission features**

| $n_{TRID}$ | Transmission feature |
|---|---|
| 0 | Uplink transmission/sidelink uplink transmission/backhaul uplink transmission |
| 1 | Downlink transmission/sidelink downlink transmission/backhaul downlink transmission |

Table 1 shows $n_{TRID}$ values corresponding to different transmission features. When the receive-end device determines the base sequence $C_{init} = X + bn_{TRID}$ of the reference signal, the $n_{TRID}$ value corresponding to the transmission feature may be substituted into the formula to perform calculation.

For another example, refer to Table 2.

**Table 2 Table of a correspondence between $n_{TRID}$ values and transmission features**

| $n_{TRID}$ | Transmission feature |
|---|---|
| 0 | Uplink transmission |
| 1 | Downlink transmission |
| 2 | Sidelink uplink transmission |
| 3 | Sidelink downlink transmission |
| 4 | Backhaul uplink transmission |
| 5 | Backhaul downlink transmission |

Table 2 also shows $n_{TRID}$ values corresponding to different transmission features. When the receive-end device determines the base sequence $C_{init} = X + bn_{TRID}$ of the reference signal, the $n_{TRID}$ value corresponding to the transmission feature may also be substituted into the formula to perform calculation.

It should be understood that the foregoing Table 1 and Table 2 merely show some possible correspondences between transmission features and $n_{TRID}$ values, but do not constitute a limitation on this embodiment of this application.

It should be further understood that a correspondence (for example, as shown in Table 1 and Table 2) predefined in the communications system may be obtained by both the receive-end device and a transmit-end device (for example, a network device and a terminal device). Likewise, the following other correspondences predefined in the communications system may also be obtained by both the receive-end device and the transmit-end device.

It should be noted that the value of $X$ in $C_{init} = X + bn_{TRID}$ may be stipulated in the Long Term Evolution system LTE communications protocol release, or may be different from that stipulated in the LTE communications protocol. This is not limited.

For example, when the value of $X$ in $C_{init} = X + bn_{TRID}$ is stipulated in LTE, $n_{TRID}$ is added based on a formula for calculating a base sequence of a reference signal in LTE, so as to calculate an initialization value of the base sequence of the reference signal, and further calculate the base sequence of the reference signal. Specifically, in $C_{init} = X + bn_{TRID}$, a variable in $X$ may be the same as that defined in LTE. Then the initialization value of the base sequence of the reference signal is determined based on the following formula:

$$c_{\text{init}} = \left( \lfloor n_s / 2 \rfloor + 1 \right) \cdot \left( 2 n_{\text{ID}}^{(n_{\text{SCID}})} + 1 \right) \cdot 2^{16} + a n_{\text{SCID}} + b n_{TRID}$$

where $C_{\text{init}}$ represents the initialization value of the base sequence of the reference signal; a is a positive integer not less than 0 and not greater than $2^{15}$ (for example, $a = 2^8$); b is a positive integer not less than 1 and not greater than $2^{15}$ (for example, b = 1); $n_{TRID}$ represents a value corresponding to the transmission feature; and definitions of other variables are the same as those in LTE TS 36.211: $n_s$ represents a slot number, $n_{\text{ID}}^{(n_{\text{SCID}})}$ is a value configured by using higher layer signaling, or a cell identity ID, and $n_{\text{SCID}}$ is a value (for example, 0 or 1) indicated by using control information.

To sum up, according to the reference signal configuration method in this embodiment of this application, during calculation of the base sequence of the reference signal, the transmission feature is introduced and used as the first parameter. This can reduce interference between uplink and downlink reference channels in a cell.

During a reference signal design in this embodiment of this application, another embodiment is further provided, to determine an orthogonal cover code (Orthogonal Cover Code, OCC) mapping manner and/or length based on the first parameter.

The first parameter comprises at least one of the subcarrier spacing and the operating band of the subcarrier spacing, and the subcarrier spacing is any one of at least one subcarrier spacing.

S210 includes:

determining an orthogonal cover code mapping manner of the reference signal based on at least one of the subcarrier spacing and the operating band of the subcarrier spacing, where the configuration information includes the orthogonal cover code mapping manner of the reference signal.

The method 200 further includes:

mapping, according to the orthogonal cover code mapping manner of the reference signal, reference signals using a same orthogonal cover code to subcarriers that are consecutive in time domain and frequency domain, to perform sending; or

mapping, according to the orthogonal cover code mapping manner of the reference signal, reference signals using a same orthogonal cover code to subcarriers that are non-consecutive in time domain and frequency domain, to perform sending.

Specifically, the receive-end device may determine the OCC mapping manner of the reference signal based on at least one of the subcarrier spacing and the operating band (for example, a corresponding carrier frequency) corresponding to the subcarrier spacing. Then the reference signals using the same (the same) OCC are mapped, according to the OCC mapping manner, to the subcarrier that is consecutive in time domain and frequency domain, to perform sending; or the reference signals using the same OCC are mapped, according to the OCC mapping manner, to the subcarrier that is non-consecutive in time domain and frequency domain, to perform sending.

In this embodiment of this application, the "mapping reference signals subcarriers that are consecutive or non-consecutive in time domain and frequency domain, to perform sending" may be specifically implemented according to different OCC mapping manners. For example, the different OCC mapping manners may include an OCC mapping manner 1 and an OCC mapping manner 2. In this embodiment of this application, different subcarrier spacings, or operating bands corresponding to different subcarrier spacings may be corresponding to different OCC mapping manners.

For example, a correspondence between an OCC mapping manner, and a subcarrier spacing or an operating band (for example, a carrier frequency) corresponding to a subcarrier spacing may be predefined in the communications system. For example, refer to Table 3.

**Table 3 Correspondence between subcarrier spacings/carrier frequencies and mapping manners of a same OCC**

| Subcarrier spacing/carrier frequency | Mapping manner of a same OCC |
| --- | --- |
| 15 KHz/4 GHz | OCC mapping manner 1 |
| 60 KHz/30 GHz | OCC mapping manner 2 |
| 120 KHz/30 GHz | OCC mapping manner 1 |

The OCC mapping manner 1 may be: mapping reference signals using a same OCC to a subcarrier $l_1$, where $l_1$ is a subcarrier in bandwidth occupied by a data channel, and $l_1$ satisfies $l_1 \bmod(4) \in \{0,1\}$ or $l_1 \bmod(4) \in \{2,3\}$. Herein, a result obtained by performing a modulo operation on $l_1$ and 4 is that every two consecutive subcarriers form one OCC group.

The OCC mapping manner 2 may be: mapping reference signals using a same OCC to a subcarrier $l_2$, where $l_2$ is a subcarrier in bandwidth occupied by a data channel, and $l_2$ satisfies $l_2 \bmod(2) \in \{0\}$ or $l_2 \bmod(2) \in \{1\}$. Herein, a result obtained by performing a modulo operation on $l_2$ and 2 is that every two consecutive subcarriers at an interval of one subcarrier form one OCC group.

Table 3 shows OCC mapping manners corresponding to different subcarrier spacings or carrier frequencies. The receive-end device may select a corresponding OCC mapping manner based on a current subcarrier spacing, so as to determine mapping information of the reference signal.

It should be understood that Table 2 merely shows OCC mapping manners corresponding to three different subcarrier spacings or carrier frequencies as an example. In practice, types of subcarrier spacings or carrier frequencies may be more diverse, and an OCC mapping manner may be selected or defined as required. This is not limited.

With reference to Table 3, the foregoing describes the OCC mapping manners that are corresponding to: different subcarrier spacings, or operating bands corresponding to different subcarrier spacings. The following describes OCC lengths that are corresponding to: different subcarrier spacings, or operating bands corresponding to different subcarrier spacings.

The first parameter comprises first parameter includes at least one of the subcarrier spacing and the operating band of the subcarrier spacing.

S210 includes:

determining an orthogonal cover code length of the reference signal based on at least one of the subcarrier spacing and the operating band of the subcarrier spacing, where the configuration information includes the orthogonal cover code length of the reference signal.

Specifically, the receive-end device may determine the OCC length based on at least one of the subcarrier spacing and the operating band of the subcarrier spacing. There may also be a correspondence between the OCC length, and the subcarrier spacing and/or the operating band corresponding to the subcarrier spacing. The correspondence may also be predefined in the communications system.

For example, a correspondence between an OCC length, and a subcarrier spacing or a carrier frequency may also be predefined in the communications system. For example, refer to Table 4.

**Table 4 Correspondence between subcarrier spacings/carrier frequencies and OCC lengths**

| Subcarrier spacing/carrier frequency | OCC length |
|---|---|
| 15 KHz/4 GHz | 2 |
| 60 KHz/30 GHz | 4 |
| 120 KHz/30 GHz | 2 |

Table 4 shows OCC lengths corresponding to different subcarrier spacings or carrier frequencies. The receive-end device may select a corresponding OCC length based on a current subcarrier spacing, so as to determine mapping information of the reference signal.

It should be understood that Table 4 merely shows OCC lengths corresponding to three different subcarrier spacings or carrier frequencies as an example. In a future communications system, types of subcarrier spacings or carrier frequencies may be more diverse, and OCC lengths corresponding to the subcarrier spacings or carrier frequencies may be selected or defined as required. This is not limited.

For example, after selecting an OCC mapping manner and an OCC length, a transmit-end device (for example, a network device) may perform orthogonal spread spectrum processing according to the OCC mapping manner, and send a reference signal to a receive-end device (for example, a terminal device). Correspondingly, the terminal device performs orthogonal cover code demodulation on the received reference signal according to the OCC mapping manner and based on the OCC length, so as to perform channel estimation. Therefore, in this embodiment of this application, an optimal OCC configuration may be selected based on different subcarrier spacings, thereby improving flexibility of an OCC of the reference signal.

During a reference signal design in this embodiment of this application, another embodiment is further provided, to determine, based on the first parameter, at least one of the maximum value of the quantity of resource blocks (Resource Block, RB) of the reference signal, the number of the RB to which the reference signal is mapped during resource mapping, and the ratio of the total length of the base sequence of the reference signal to the maximum value of the quantity of RBs.

The first parameter comprises at least one of transmission bandwidth of the subcarrier spacing and a start frequency of the transmission bandwidth of the subcarrier spacing; and the transmission bandwidth of the subcarrier spacing represents maximum available bandwidth of the subcarrier spacing.

The first parameter comprises at least one of a subcarrier spacing used for transmitting the reference signal, an operating band of the subcarrier spacing, the system bandwidth, transmission bandwidth of the subcarrier spacing, and a start frequency of the transmission bandwidth of the subcarrier spacing.

S210 may include:

determining mapping information of the reference signal based on the first parameter, where the mapping information includes at least one of a maximum value of a quantity of resource blocks RBs of the reference signal, a number of an RB to which the reference signal is mapped during resource mapping, and a ratio of a total length of the base sequence of the reference signal to the maximum value of the quantity of RBs.

Specifically, the receive-end device may determine the mapping information of the reference signal based on at least one of the subcarrier spacing (of current data transmission) used for transmitting the reference signal, the operating band of the subcarrier spacing, the system bandwidth, the transmission bandwidth of the subcarrier spacing, and the start frequency of the transmission bandwidth of the subcarrier spacing. The mapping information may include at least one of a maximum value of a quantity of RBs to which the reference signal is mapped, the number of the RB to which the reference signal is mapped during resource mapping, and the ratio of the total length of the base sequence of the reference signal to the maximum value of the quantity of RBs.

In this embodiment of this application, the maximum value of the quantity of RBs of the reference signal, the number of the RB to which the reference signal is mapped during resource mapping, and the ratio of the total length of the base sequence of the reference signal to the maximum value of the quantity of RBs may be reflected in the formula for calculating the base sequence of the reference signal. The formula for calculating the base sequence of the reference signal is specifically as follows:

$$r(m) = \frac{1}{\sqrt{2}}\big(1 - 2 \cdot c(2m)\big) + j\frac{1}{\sqrt{2}}\big(1 - 2 \cdot c(2m+1)\big),$$

$$m = \begin{cases} 0,1,...,D_f N_{RB}^{max,DL} - 1 & \text{normal cyclic prefix} \\ 0,1,...,D_f N_{RB}^{max,DL} - 1 & \text{extended cyclic prefix} \end{cases}$$

where c represents an initialization value (which may be calculated with reference to $C_{init}$ described above) of the base sequence of the reference signal, $N_{RB}^{max,DL}$ is the maximum value of the quantity of RBs (or referred to as a maximum RB quantity), $D_f$ is the ratio of the total length of the base sequence of the reference signal to the maximum value of the quantity of RBs (or referred to as a reference signal density factor), $n_{PRB}$ represents the number of the RB to which the reference signal is mapped during resource mapping (namely, a number of each RB to which the reference signal is mapped), and for a definition of a value of m, refer to LTE TS 36.211.

In this embodiment of this application, the receive-end device may determine the mapping information of the reference signal based on at least one of the subcarrier spacing used for transmitting the reference signal, the operating band of the subcarrier spacing, the system bandwidth, the transmission bandwidth of the subcarrier spacing, and the start frequency of the transmission bandwidth of the subcarrier spacing. The mapping information includes at least one of the maximum value of the quantity of resource blocks RBs for the reference signal, the number of the RB to which the reference signal is mapped during resource mapping, and the ratio of the total length of the base sequence of the reference signal to the maximum value of the quantity of RBs.

The following separately describes the maximum value (namely, $N_{RB}^{max,DL}$) of the quantity of resource blocks RBs, the number of the RB (namely, $n_{PRB}$) to which the reference signal is mapped during resource mapping, and the ratio (namely, $D_f$) of the total length of the base sequence of the reference signal to the maximum value of the quantity of RBs.

Optionally, in an embodiment, the determining mapping information of the reference signal based on the first parameter includes:

determining the maximum value of the quantity of RBs based on the subcarrier spacing and the transmission bandwidth of the subcarrier spacing, where the mapping information includes the maximum value of the quantity of RBs; or
determining the maximum value of the quantity of resource blocks based on the subcarrier spacing and the system bandwidth, where the mapping information includes the maximum value of the quantity of resource blocks.

In this embodiment of this application, specifically, the receive-end device may calculate $N_{RB}^{max,DL}$ based on the subcarrier spacing used for transmitting the reference signal, a quantity of subcarriers in a resource block corresponding to the subcarrier spacing, and the transmission bandwidth corresponding to the subcarrier spacing.

Optionally, specifically, for example, the maximum value of the quantity of RBs is determined based on the following formula:

$$N_{\text{RB}}^{\text{max,DL}} = \frac{N_i}{a_i \cdot M_i}$$

where $N_{\text{RB}}^{\text{max,DL}}$ represents the maximum value of the quantity of RBs; $a_i$ represents the subcarrier spacing used for transmitting the reference signal; i is an integer, and i represents a number of the subcarrier spacing used for transmitting the reference signal in the at least one subcarrier spacing; $N_i$ represents an operating band corresponding to an ith subcarrier spacing; and $M_i$ represents a quantity of subcarriers in a resource block corresponding to the ith subcarrier spacing.

For example, when the subcarrier spacing used for transmitting the reference signal is 60 KHz, and the transmission bandwidth corresponding to the subcarrier spacing is N, the maximum value of the quantity of RBs may be calculated based on the following formula:

$$N_{\text{RB}}^{\text{max,DL}} = \frac{N}{60 * M}$$

where M represents a quantity of subcarriers in one RB.

It should be noted that, if there are a plurality of different subcarrier spacings in the communications system, maximum RB quantities corresponding to all the subcarrier spacings may be calculated based on the foregoing formula.

Optionally, specifically, for example, the maximum value of the quantity of RBs may alternatively be determined based on the following formula:

$$N_{\text{RB}}^{\text{max,DL}} = \max\left\{\frac{N_i}{a_i \cdot M_i}\right\}$$

where $N_{\text{RB}}^{\text{max,DL}}$ represents the maximum value of the quantity of RBs; max { } means taking a maximum value; $a_i$ represents an ith subcarrier spacing in the at least one subcarrier spacing, where i is an integer; $N_i$ represents an operating band of the ith subcarrier spacing; and $M_i$ represents a quantity of subcarriers in a resource block corresponding to the ith subcarrier spacing.

To be specific, in this embodiment of this application, for a plurality of different subcarrier spacings, the receive-end device may calculate a maximum value of a quantity of RBs corresponding to each subcarrier spacing; then select a maximum value from maximum values, of the quantity of RBs corresponding to the plurality of subcarrier spacings; and use the maximum value as a maximum value of the quantity of RBs corresponding to a subcarrier spacing used for transmitting a current reference signal.

In the foregoing two formulas, bandwidth of a subcarrier spacing is transmission bandwidth corresponding to the subcarrier spacing. Optionally, bandwidth of a subcarrier spacing may alternatively be corresponding system bandwidth. The following describes an embodiment in which bandwidth of a subcarrier spacing is corresponding system bandwidth.

Optionally, specifically, for example, the maximum value of the quantity of RBs may be determined based on the following formula:

$$N_{\text{RB}}^{\text{max,DL}} = \frac{N}{a_i \cdot M_i}$$

where $N_{\text{RB}}^{\text{max,DL}}$ represents the maximum value of the quantity of RBs; $a_i$ represents the subcarrier spacing used for transmitting the reference signal; i is an integer, and i represents a number of the subcarrier spacing used for transmitting the reference signal in the at least one subcarrier spacing; N represents the system bandwidth; and $M_i$ represents a quantity of subcarriers in a resource block corresponding to an ith subcarrier spacing.

To be specific, the receive-end device may calculate, based on the system bandwidth corresponding to the subcarrier spacing used for transmitting the reference signal, the maximum value of the quantity of RBs corresponding to the subcarrier spacing.

Optionally, specifically, for example, the maximum value of the quantity of RBs is determined based on the following formula:

$$N_{RB}^{max,DL} = \max\left\{\frac{N}{a_i \cdot M_i}\right\}$$

where $N_{RB}^{max,DL}$ represents the maximum value of the quantity of RBs; max{} means taking a maximum value; $a_i$ represents an ith subcarrier spacing in the at least one subcarrier spacing, where i is an integer; $N$ represents the system bandwidth; and $M_i$ represents a quantity of subcarriers in a resource block corresponding to the ith subcarrier spacing.

Similarly, a maximum value of the quantity of RBs corresponding to each of a plurality of subcarrier spacings may be calculated based on the system bandwidth. Then a maximum value is selected from a plurality of maximum values of the quantity of RBs corresponding to the plurality of subcarrier spacings, and is used as the maximum value of the quantity of RBs, corresponding to the subcarrier spacing used for transmitting the reference signal.

To sum up, the receive-end device may calculate the maximum value of the quantity of RBs based on the subcarrier spacing and the transmission bandwidth of the subcarrier spacing. It should be understood that a specific method used for calculating the maximum value of the quantity of RBs may be predefined in a communications system or configured by a network device. This is not limited.

Optionally, in an embodiment, the determining mapping information of the reference signal based on the first parameter includes:

determining, based on the subcarrier spacing and the start frequency of the transmission bandwidth of the subcarrier spacing, the number of the RB to which the reference signal is mapped during resource mapping; or

determining, based on the subcarrier spacing and the operating band of the subcarrier spacing, the number of the RB to which the reference signal is mapped during resource mapping, where the mapping information includes the number of the RB to which the reference signal is mapped during resource mapping.

Specifically, in this embodiment of this application, a network device may calculate $n_{PRB}$ based on the subcarrier spacing used for transmitting the reference signal, a quantity of subcarriers in one RB corresponding to the subcarrier spacing used for transmitting the reference signal, a frequency value corresponding to the one RB, and the start frequency value of the transmission bandwidth corresponding to the subcarrier spacing used for transmitting the reference signal.

Optionally, specifically, for example, the RB number may be determined based on the following formula:

$$n_{PRB} = \left\lfloor \frac{f - f_{low}}{N_{SC}^{RB}\Delta f} \right\rfloor ;$$

or

$$n_{PRB} = \left\lfloor \frac{f - f_{low}^{band}}{N_{SC}^{RB}\Delta f} \right\rfloor$$

where $n_{PRB}$ represents the RB number; $f$ represents a frequency value corresponding to the one RB; $f_{low}$ represents a lowest frequency value of the system bandwidth; $N_{SC}^{RB}$ represents the quantity of subcarriers in the one RB; $\Delta f$ represents the subcarrier spacing used for transmitting the reference signal; and $f_{low}^{band}$ represents a lowest frequency value of the transmission bandwidth of the subcarrier spacing used for transmitting the reference signal.

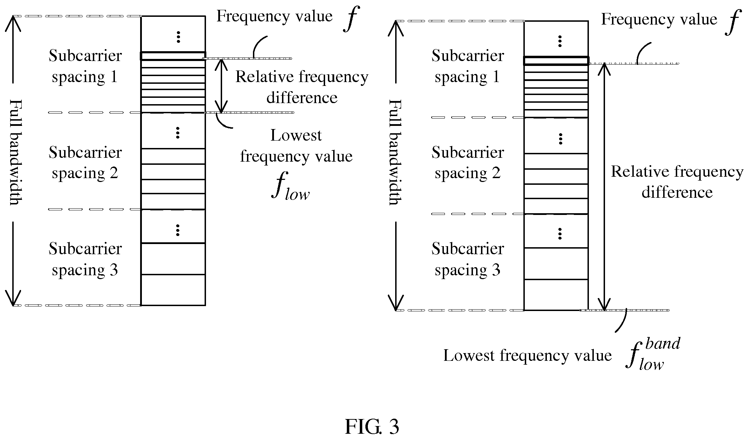

Specifically, the network device may calculate the RB number based on a relative frequency difference. For clearer understanding of a process of calculating the RB number, FIG. 3 shows a schematic diagram of an example according to this embodiment of this application. As shown in FIG. 3, for three subcarrier spacings (a subcarrier spacing 1, a subcarrier spacing 2, and a subcarrier spacing 3 shown in the figure), a diagram on the left is corresponding to a

$$n_{\mathrm{PRB}} = \left| \frac{f - f_{low}}{N_{SC}^{RB} \Delta f} \right|$$

calculation method of a formula , and a relative frequency difference of the subcarrier spacing 1 is obtained by subtracting a lowest frequency value $f_{low}$ of bandwidth corresponding to the subcarrier spacing 1 from a frequency value $f$ of an RB corresponding to the subcarrier spacing 1. A diagram on the right is corresponding to a

$$n_{\mathrm{PRB}} = \left| \frac{f - f_{low}^{band}}{N_{SC}^{RB} \Delta f} \right|$$

calculation method of a formula , and the relative frequency difference of the subcarrier spacing 1 is obtained by subtracting a lowest frequency value $f_{low}^{band}$ of full bandwidth corresponding to the subcarrier spacing 1 from the frequency value $f$ of the RB corresponding to the subcarrier spacing 1.

To sum up, the receive-end device may calculate, based on a relative frequency difference of the subcarrier spacing used for transmitting the reference signal, the RB number of the reference signal.

Optionally, in an embodiment, for $D_f$ the determining mapping information of the reference signal based on the first parameter includes:

determining the ratio of the total length of the base sequence of the reference signal to a maximum quantity of resource blocks based on at least one of the subcarrier spacing and the operating band of the subcarrier spacing, where the mapping information includes the ratio of the total length of the base sequence of the reference signal to the maximum value of the quantity of RBs.

Specifically, the receive-end device may determine $D_f$ with reference to at least one of the subcarrier spacing used for transmitting the reference signal, a quantity of subcarriers in one RB corresponding to the subcarrier spacing used for transmitting the reference signal, and a carrier frequency corresponding to the subcarrier spacing used for transmitting the reference signal. A difference from that in LTE lies in: $D_f$ may be adjusted based on a subcarrier spacing of current data transmission and/or a quantity of subcarriers in one RB.

Optionally, the determining the ratio of the total length of the base sequence to the maximum value of the quantity of RBs includes:

when the subcarrier spacing is greater than or equal to a first threshold, determining a first ratio, where the first ratio is the ratio of the total length of the base sequence of the reference signal to the maximum value of the quantity of RBs; or

when the subcarrier spacing is less than the first threshold, determining a second ratio, where the second ratio is the ratio of the total length of the base sequence of the reference signal to the maximum value of the quantity of RBs, and the first ratio is different from the second ratio.

Herein, $D_f$ represents the ratio of the total length of the base sequence to the maximum value of the quantity of RBs. For example, if a subcarrier spacing of current data transmission is relatively large (for example, greater than the first threshold); or if a carrier frequency in this case is a high frequency (for example, 30 GHz), a channel changes relatively slowly, and density is relatively low, a value of $D_f$ may be relatively low (for example, is the first ratio). Alternatively, if a subcarrier spacing of current data transmission is relatively small (for example, less than the first threshold); or if a carrier frequency in this case is a low frequency (for example, 4 GHz), a channel changes relatively fast, and density is relatively high, a value of $D_f$ may be relatively low (for example, is the second ratio).

Optionally, the method further includes:

determining, based on a plurality of different subcarrier spacings, a ratio of a total length of a base sequence corresponding to each of the plurality of different subcarrier spacings, to the maximum value of the quantity of RBs.

For example, a first subcarrier spacing is corresponding to a first ratio, a second subcarrier spacing is corresponding to a second ratio, and the first ratio is different from the second ratio.

Specifically, the receive-end device may determine $D_f$ corresponding to each of a plurality of different subcarrier spacings.

To sum up, the receive-end device may determine $D_f$ based on a status (for example, a high frequency or a low frequency) of a current subcarrier spacing.

The foregoing separately describes methods for determining $N_{\mathrm{RB}}^{\max,\mathrm{DL}}$, $n_{\mathrm{PRB}}$, and $D_f$, so that the receive-end device can use an optimal reference signal mapping method under different subcarrier spacings. This improves flexibility for mapping a reference signal, and improves channel estimation performance for a reference signal under different subcarrier spacings.

The following describes an embodiment about how to determine configuration information when there is an aggregated time-domain resource unit in the communications system.

Optionally, in an embodiment, the first parameter includes the quantity of aggregated time-domain resource units.

The determining configuration information of a reference signal based on a first parameter includes:

determining, based on the quantity of aggregated time-domain resource units, an index of a time-domain symbol that is in the aggregated time-domain resource units and to which the reference signal is mapped, where the configuration information includes the index of the time-domain symbol to which the reference signal is mapped.

Specifically, the receive-end device may determine, based on the quantity of aggregated time-domain resource units (for example, aggregated time-domain resource units such as aggregated subframes, aggregated slots slots, or mini-slots), the index of the time-domain symbol (namely, a location of the time-domain symbol) to which the reference signal is mapped.

The first parameter comprises the quantity of aggregated time-domain resource units, and the quantity of symbols that are in the aggregated time-domain resources and to which the reference signal is mapped.

S210 includes:

determining, based on the quantity of aggregated time-domain resource units, and the quantity of symbols that are in the aggregated time-domain resources and to which the reference signal is mapped, an index of a time-domain symbol that is in the aggregated time-domain resource units and to which the reference signal is mapped, where the configuration information includes the index of the time-domain symbol to which the reference signal is mapped.

Specifically, the receive-end device may determine the index of the time-domain symbol to which the reference signal is mapped, based on an aggregated time-domain resource unit, and the quantity of symbols that are in the aggregated time-domain resources and to which the reference signal is mapped.

For example, if the receive-end device is a terminal device, the terminal device may receive the quantity, sent by a network device, of symbols that are in the aggregated time-domain resources and to which the reference signal is mapped; and then determine the index of the time-domain symbol to which the reference signal is mapped with reference to the aggregated time-domain resource unit. Optionally, the quantity, determined by the network device, of symbols that are in the aggregated time-domain resources and to which the reference signal is mapped may be notified to the terminal device through semi-static configuration, or may be delivered to the terminal device by using downlink control information (Downlink Control Information, DCI). This is not limited.

Optionally, in this embodiment of this application, there may be a correspondence between the aggregated time-domain resource unit (for example, a quantity of aggregated subframes), the quantity of symbols that are in the aggregated time-domain resources and to which the reference signal is mapped (for example, a quantity of symbols in an aggregated subframe), and the index of the time-domain symbol of the reference signal. The correspondence may be predefined in the communications system. For example, refer to Table 5.

**Table 5 Correspondence between a quantity of aggregated subframes, a quantity of symbols in the aggregated subframes, and indexes of symbols occupied by a reference signal**

| Quantity of aggregated subframes | Quantity of symbols in the aggregated subframes | Indexes of symbols occupied by a reference signal |
|---|---|---|
| 2 | 3 | Subframe 1#2, subframe 1#11, and subframe 2#6 |
| 2 | 4 | Subframe 1#2, subframe 1#9, subframe 2#2, and subframe 2#9 |
| 3 | 3 | Subframe 1#2, subframe 2#2, and subframe 3#2 |
| 3 | 4 | Subframe 1#2, subframe 1#12, subframe 2#8, and subframe 3#4 |

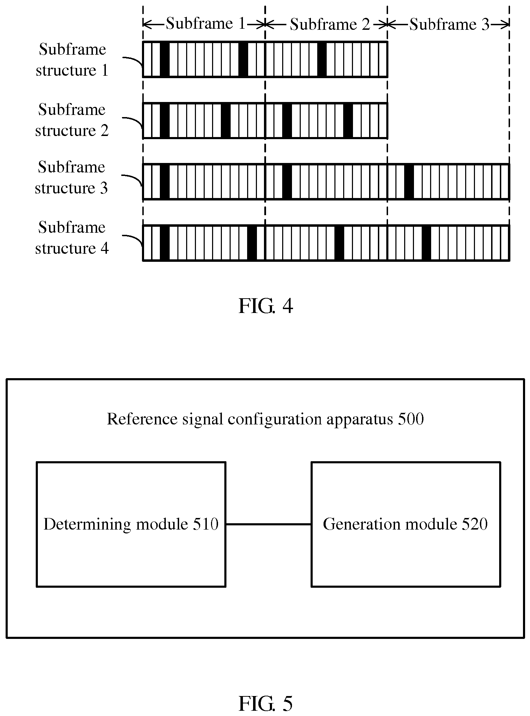

Table 5 shows a case in which there are two or three aggregated subframes, and gives a symbol quantity corresponding to the two or three aggregated subframes, and indexes of symbols occupied by a reference signal. To more clearly describe the correspondence between the quantity of aggregated subframes, the quantity of symbols in the aggregated subframe, and the indexes of the symbols occupied by the reference signal, descriptions are provided with reference to FIG. 4. FIG. 4 is a schematic diagram of a subframe structure used when there are two or three aggregated subframes. As shown in FIG. 4, in a subframe structure 1 (a subframe 1 and a subframe 2 are aggregated, and a quantity of symbols in an aggregated subframe is 3), locations (shaded parts in the figure) of symbols occupied by a reference signal are a subframe 1#2, a subframe 1#11, and a subframe 2#6; in a subframe structure 2 (a subframe 1 and a subframe 2 are aggregated, and a quantity of symbols in an aggregated subframe is 4), locations (shaded parts in the figure) of symbols occupied by a reference signal are a subframe 1#2, a subframe 1#9, a subframe 2#2, and a subframe 2#9; in a subframe structure 3 (a subframe 1, a subframe 2, and a subframe 3 are aggregated, and a quantity of symbols in an aggregated subframe is 3), locations (shaded parts in the figure) of symbols occupied by a reference signal are a subframe 1#2, a subframe 2#2, and a subframe 3#2; in a subframe structure 4 (a subframe 1, a subframe 2, and a subframe 3 are aggregated, and a quantity of symbols in an aggregated subframe is 4), locations (shaded parts in the figure) of symbols occupied by a reference signal are a subframe 1#2, a subframe 1#12, a subframe 2#8, and a subframe 3#4.

In this embodiment of this application, the receive-end device may determine, based on the quantity of aggregated time-domain resource units, and a location of a time-domain symbol occupied by the reference signal, so that the reference signal can be mapped to a proper symbol location when there are different aggregated time-domain resource units or different channel change speeds. This improves flexibility for mapping a reference signal, and improves channel estimation performance.

It should be understood that specific configuration information described in the foregoing embodiments, for example, information determined based on the transmission feature, such as the base sequence of the reference signal, the OCC mapping manner, the OCC length, the maximum value of the quantity of RBs, the RB number, the ratio of the total length of the base sequence of the reference signal to the maximum value of the quantity of RBs, and the index of the time-domain symbol to which the reference signal is mapped, may be used in any combination, or may be used independently. In other words, the configuration information can be used very flexibly, not limited to using only configuration information that is in one or more embodiments. This is not limited in this application.

It should be noted that the reference signal configuration method in this embodiment of this application may be applied to a receive-end device, or may be applied to a transmit-end device. This is not limited in this application. For the receive-end device, there may be a transmit-end device corresponding to the receive-end device. For the transmit-end device, there may be a receive-end device corresponding to the transmit-end device.

The foregoing describes the reference signal configuration method according to this embodiment of this application. The following describes a reference signal configuration apparatus according to an embodiment of this application.

FIG. 5 shows a reference signal configuration apparatus 500 according to an embodiment of this application. The apparatus 500 may perform the reference signal configuration methods in the foregoing embodiments. It should be understood that the apparatus 500 in this embodiment of this application may be a terminal device, for example, UE; or a network-side device, for example, a base station. This is not limited in this embodiment of this application. As shown in FIG. 5, the apparatus 500 includes:

a determining module 510, configured to determine configuration information of a reference signal based on a first parameter, where the first parameter includes at least one of a transmission feature, a subcarrier spacing, an operating band of the subcarrier spacing, system bandwidth, a quantity of aggregated time-domain resource units, and a quantity of symbols that are in aggregated time-domain resources and to which the reference signal is mapped; and

a generation module 520, configured to generate the reference signal based on the configuration information determined by the determining module 510.

The apparatus 500 in this embodiment of this application determines the configuration information of the reference signal based on the first parameter, where the first parameter includes at least one of the transmission feature, the subcarrier spacing, the operating band of the subcarrier spacing, the system bandwidth, the quantity of aggregated time-domain resource units, and the quantity of symbols that are in the aggregated time-domain resources and to which the reference signal is mapped; and generates the reference signal based on the configuration information. This can meet a configuration requirement of a new-generation communications system.

The determining module 510 is specifically configured to:
determine a base sequence of the reference signal based on the transmission feature, where the transmission feature is determined based on a transmission identifier of the reference signal.

The determining module 510 is specifically configured to:

determine an initialization value of the base sequence of the reference signal based on the transmission feature; and

the generation module 520 is specifically configured to:
generate the base sequence of the reference signal based on the initialization value of the base sequence of the reference signal.

The generation module 520 is specifically configured to:
generate the reference signal based on the base sequence of the reference signal.

Optionally, the determining module 510 is specifically configured to:
determine an orthogonal cover code mapping manner of the reference signal based on at least one of the subcarrier spacing and the operating band of the subcarrier spacing, where the configuration information includes the orthogonal cover code mapping manner of the reference signal.

The apparatus 500 may further include:

a processing module, configured to: map, according to the orthogonal cover code mapping manner of the reference signal that is determined by the determining module, reference signals using a same orthogonal cover code to subcarriers that are consecutive in time domain and frequency domain, to perform sending; or
map, according to the orthogonal cover code mapping manner of the reference signal that is determined by the determining module, reference signals using a same orthogonal cover code to subcarriers that are non-consecutive in time domain and frequency domain, to perform sending.

Optionally, the determining module 510 is specifically configured to:
determine an orthogonal cover code length of the reference signal based on at least one of the subcarrier spacing and the operating band of the subcarrier spacing that are included in the first parameter, where the configuration information includes the orthogonal cover code length of the reference signal.

The first parameter comprises at least one of transmission bandwidth of the subcarrier spacing and a start frequency of the transmission bandwidth of the subcarrier spacing; and the transmission bandwidth of the subcarrier spacing represents maximum available bandwidth of the subcarrier spacing.

Optionally, the determining module 510 is specifically configured to:
determine mapping information of the reference signal based on at least one of a subcarrier spacing used for transmitting the reference signal, an operating band of the subcarrier spacing, the system bandwidth, transmission bandwidth of the subcarrier spacing, and a start frequency of the transmission bandwidth of the subcarrier spacing, where the mapping information includes at least one of a maximum value of a quantity of resource blocks RBs, a number of an RB to which the reference signal is mapped during resource mapping, and a ratio of a total length of the base sequence of the reference signal to the maximum value of the quantity of RBs.

Optionally, the determining module 510 is specifically configured to:

determine the maximum value of the quantity of RBs based on the subcarrier spacing and the transmission bandwidth of the subcarrier spacing, where the mapping information includes the maximum value of the quantity of RBs; or
determine the maximum value of the quantity of resource blocks based on the subcarrier spacing and the system bandwidth, where the mapping information includes the maximum value of the quantity of resource blocks.

Optionally, the determining module 510 is specifically configured to:

determine, based on the subcarrier spacing and the start frequency of the transmission bandwidth of the subcarrier spacing, the number of the RB to which the reference signal is mapped during resource mapping; or
determine, based on the subcarrier spacing and the operating band of the subcarrier spacing, the number of the RB to which the reference signal is mapped during resource mapping, where the mapping information includes the number of the RB to which the reference signal is mapped during resource mapping.

Optionally, the determining module 510 is specifically configured to:
determine the ratio of the total length of the base sequence of the reference signal to a maximum quantity of resource blocks based on at least one of the subcarrier spacing and the operating band of the subcarrier spacing, where the mapping information includes the ratio of the total length of the base sequence of the reference signal to the maximum value of the quantity of RBs.

Optionally, the determining module 510 is specifically configured to:

when the subcarrier spacing is greater than or equal to a first threshold, determine a first ratio, where the first ratio is the ratio of the total length of the base sequence of the reference signal to the maximum value of the quantity of RBs; or

when the subcarrier spacing is less than the first threshold, determine a second ratio, where the second ratio is the ratio of the total length of the base sequence of the reference signal to the maximum value of the quantity of RBs, and the first ratio is different from the second ratio.

Optionally, the determining module 510 is specifically configured to:
determine, based on the quantity of aggregated time-domain resource units, an index of a time-domain symbol that is in the aggregated time-domain resource units and to which the reference signal is mapped, where the configuration information includes the index of the time-domain symbol to which the reference signal is mapped.

Optionally, the determining module 510 is specifically configured to:
determine, based on the quantity of aggregated time-domain resource units, and the quantity of symbols that are in the aggregated time-domain resources and to which the reference signal is mapped, an index of a time-domain symbol that is in the aggregated time-domain resource units and to which the reference signal is mapped, where the configuration information includes the index of the time-domain symbol to which the reference signal is mapped.

Optionally, the apparatus 500 may further include:
a sending module, configured to send the reference signal in the time-domain symbol corresponding to the index of the time-domain symbol.

The apparatus 500 according to this embodiment of this application may be corresponding to an execution body of the method 200 according to the embodiments of this application, and the foregoing and other operations and/or functions of the modules in the apparatus 500 are used to separately implement corresponding procedures of the foregoing methods. For brevity, details are not described herein.

Therefore, the apparatus 500 in this embodiment of this application determines the configuration information of the reference signal based on the first parameter, where the first parameter includes at least one of the transmission feature, the subcarrier spacing, the operating band of the subcarrier spacing, the system bandwidth, the quantity of aggregated time-domain resource units, and the quantity of symbols that are in the aggregated time-domain resources and to which the reference signal is mapped; and generates the reference signal based on the configuration information. This can meet a configuration requirement of a new-generation communications system.

Optionally, an embodiment of this application further provides a peer-end apparatus that communicates with the apparatus 500. Specifically, when the apparatus 500 is a terminal device, the peer-end apparatus is a network-side device corresponding to the terminal device; or when the apparatus 500 is a network-side device, the peer-end apparatus is a terminal device corresponding to the network-side device. The network-side device and the terminal device may establish a communication connection to each other and exchange information.

Optionally, the peer-end apparatus may include: a sending module, configured to send the first parameter to the apparatus 500; and a receiving module, configured to receive a reference signal generated by the apparatus 500 based on the first parameter.

Optionally, the peer-end apparatus may receive a request message sent by the apparatus 500, and send the first parameter to the apparatus 500 based on the request message.

In a possible hardware implementation, a transmitter may perform the operation of the sending module in the peer-end apparatus, and a receiver performs the operation of the receiving module in the peer-end apparatus; or a transceiver may perform the operations of the sending module and the receiving module. Optionally, the peer-end apparatus further includes a processor, configured to control the foregoing apparatuses, such as the transmitter or the transceiver, to perform corresponding operations.

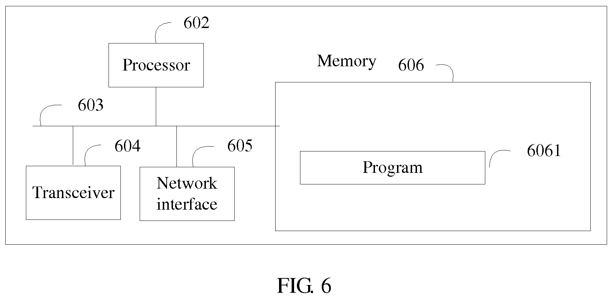

FIG. 6 shows a structure of a reference signal configuration apparatus according to another embodiment of this application. The apparatus may be included in the aforementioned terminal device or network-side device. The apparatus includes at least one processor 602 (for example, a CPU), at least one network interface 605 or another communications interface, a memory 606, at least one communications bus 603 configured to implement a connection and communication between these apparatuses, and a transceiver 604 configured to send or receive a reference signal. The processor 602 is configured to execute an executable module, such as a computer program, that is stored in the memory 606. The memory 606 may include a high-speed random access memory (Random Access Memory, RAM), or may include a non-volatile memory (non-volatile memory), for example, at least one magnetic disk storage. The at least one network interface 605 (wired or wireless) is used to implement a communications connection to at least one another network element. The transceiver 604 sends or receives a reference signal. In some implementations, the memory 606 stores a program 6061, and the processor 602 executes the program 6061, to control the transceiver 604 to perform the reference signal configuration method in the foregoing embodiments of this application.

The memory 606 may include a read-only memory and a random access memory, and provide an instruction and data for the processor 602. A part of the memory 606 may further include a non-volatile random access memory. For example, the memory 602 may further store information of a device type.

The bus system 603 may further include a power bus, a control bus, a status signal bus, and the like, in addition to a data bus. However, for clear description, various types of buses in the figure are marked as the bus system 603.

In an implementation process, steps in the foregoing methods may be implemented by using a hardware integrated logic circuit in the processor 606, or by using instructions in a form of software. The steps of the methods disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 606, and the processor 602 reads information in the memory 606 and performs the steps in the foregoing methods in combination with hardware of the processor. To avoid repetition, details are not described herein again.

Optionally, the transceiver 604 may include a transmitter and a receiver. The transmitter and the receiver may be integrated, or may be separated independent modules. The transmitter is configured to send a reference signal, and the receiver is configured to receive a reference signal.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that, in this embodiment of this application, the processor may be a central processing unit (Central Processing Unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

It should be further understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (Read-Only Memory, ROM), a random access memory RAM, a magnetic disk, or an optical disc.

The foregoing descriptions are merely specific implementations of the embodiments of this application, but are not intended to limit the protection scope of the embodiments of this application. Any variation or replacement readily figured out by a person skilled in the art within the technical scope disclosed in this application shall fall within the protection scope of the embodiments of this application. Therefore, the protection scope of the embodiments of this application shall be subject to the protection scope of the claims.

**Claims**

1. A reference signal configuration method, comprising:

   determining configuration information of a reference signal based on a first parameter, wherein the first parameter comprises at least one of a transmission feature, a subcarrier spacing, an operating band of the subcarrier spacing, system bandwidth, a quantity of aggregated time-domain resource units, and a quantity of symbols that are in aggregated time-domain resources and to which the reference signal is mapped; and
   generating the reference signal based on the configuration information,
   wherein the first parameter comprises the transmission feature, and the transmission feature is determined based on a transmission identifier of the reference signal that is used to identify the transmission direction of the reference signal; and
   the determining configuration information of a reference signal based on a first parameter comprises:

      determining a base sequence of the reference signal based on the transmission feature,
      wherein the determining a base sequence of the reference signal based on the transmission feature comprises:

   determining an initialization value of the base sequence of the reference signal based on the transmission feature; and
   the generating the reference signal based on the configuration information comprises:

      generating the base sequence of the reference signal based on the initialization value of the base sequence of the reference signal
      and wherein the initialization value of the base sequence of the reference signal is determined based on the following formula:

$$c_{\mathrm{init}} = \left( \lfloor n_s / 2 \rfloor + 1 \right) \cdot \left( 2 n_{\mathrm{ID}}^{(n_{\mathrm{SCID}})} + 1 \right) \cdot 2^{16} + a n_{\mathrm{SCID}} + b n_{TRID}$$

   where $C_{\mathrm{init}}$ represents the initialization value of the base sequence of the reference signal; $\alpha$ is a positive integer not less than 0 and not greater than 215; b is a positive integer not less than 1 and not greater than 215; $n_{TRID}$ represents a value corresponding to the transmission feature; $n_s$ represents a slot number, $n_{\mathrm{ID}}^{(n_{\mathrm{SCID}})}$ is a value configured by using higher layer signaling, or a cell identity ID, and $n_{\mathrm{SCID}}$ is a value indicated by using control information.

2. The method according to claim 1, wherein the generating the reference signal based on the configuration information comprises:
   generating the reference signal based on the base sequence of the reference signal.

3. The method according to claim 1, wherein the first parameter comprises at least one of the subcarrier spacing and the operating band of the subcarrier spacing, and the subcarrier spacing is any one of at least one subcarrier spacing; the determining configuration information of a reference signal based on a first parameter comprises:

   determining an orthogonal cover code mapping manner of the reference signal based on at least one of the subcarrier spacing and the operating band of the subcarrier spacing, wherein the configuration information comprises the orthogonal cover code mapping manner of the reference signal; and
   the method further comprises:

mapping, according to the orthogonal cover code mapping manner of the reference signal, reference signals using a same orthogonal cover code to subcarriers that are consecutive in time domain and frequency domain, to perform sending; or

mapping, according to the orthogonal cover code mapping manner of the reference signal, reference signals using a same orthogonal cover code to subcarriers that are non-consecutive in time domain and frequency domain, to perform sending.

4. The method according to claim 1, wherein the first parameter comprises at least one of the subcarrier spacing and the operating band of the subcarrier spacing; and

the determining configuration information of a reference signal based on a first parameter comprises:
determining an orthogonal cover code length of the reference signal based on at least one of the subcarrier spacing and the operating band of the subcarrier spacing, wherein the configuration information comprises the orthogonal cover code length of the reference signal.

5. The method according to claim 1, wherein the first parameter further comprises at least one of transmission bandwidth of the subcarrier spacing and a start frequency of the transmission bandwidth of the subcarrier spacing; and the transmission bandwidth of the subcarrier spacing represents maximum available bandwidth of the subcarrier spacing.

6. The method according to claim 5, wherein the first parameter comprises at least one of a subcarrier spacing used for transmitting the reference signal, an operating band of the subcarrier spacing, the system bandwidth, transmission bandwidth of the subcarrier spacing, and a start frequency of the transmission bandwidth of the subcarrier spacing; and

the determining configuration information of a reference signal based on a first parameter comprises:
determining mapping information of the reference signal based on the first parameter, wherein the mapping information comprises at least one of a maximum value of a quantity of resource blocks of the reference signal, a number of a resource block to which the reference signal is mapped during resource mapping, and a ratio of a total length of the base sequence of the reference signal to the maximum value of the quantity of resource blocks.

7. The method according to claim 6, wherein the determining mapping information of the reference signal based on the first parameter comprises:

    determining the maximum value of the quantity of resource blocks based on the subcarrier spacing and the transmission bandwidth of the subcarrier spacing, wherein the mapping information comprises the maximum value of the quantity of resource blocks; or

    determining the maximum value of the quantity of resource blocks based on the subcarrier spacing and the system bandwidth, wherein the mapping information comprises the maximum value of the quantity of resource blocks.

8. The method according to claim 6, wherein the determining mapping information of the reference signal based on the first parameter comprises:

    determining, based on the subcarrier spacing and the start frequency of the transmission bandwidth of the subcarrier spacing, the number of the resource block to which the reference signal is mapped during resource mapping; or

    determining, based on the subcarrier spacing and the operating band of the subcarrier spacing, the number of the resource block to which the reference signal is mapped during resource mapping, wherein the mapping information comprises the number of the resource block to which the reference signal is mapped during resource mapping.

9. The method according to claim 6, wherein the determining mapping information of the reference signal based on the first parameter comprises:

    determining the ratio of the total length of the base sequence of the reference signal to the maximum value of the quantity of resource blocks based on at least one of the subcarrier spacing and the operating band of the subcarrier spacing, wherein the mapping information comprises the ratio of the total length of the base sequence of the reference signal to the maximum value of the quantity of resource blocks, and optionally, wherein the determining the ratio of the total length of the base sequence of the reference signal to the maximum value of the quantity of resource blocks comprises:

when the subcarrier spacing is greater than or equal to a first threshold, determining a first ratio, wherein the first ratio is the ratio of the total length of the base sequence of the reference signal to the maximum value of the quantity of resource blocks; or

when the subcarrier spacing is less than the first threshold, determining a second ratio, wherein the second ratio is the ratio of the total length of the base sequence of the reference signal to the maximum value of the quantity of resource blocks, and the first ratio is different from the second ratio.

10. The method according to claim 1, wherein the first parameter comprises the quantity of aggregated time-domain resource units; and

the determining configuration information of a reference signal based on a first parameter comprises:

determining, based on the quantity of aggregated time-domain resource units, an index of a time-domain symbol that is in the aggregfated time-domain resource units and to which the reference signal is mapped, wherein the configuration information comprises the index of the time-domain symbol to which the reference signal is mapped, and optionally,

wherein the method further comprises:

sending the reference signal in the time-domain symbol corresponding to the index of the time-domain symbol.

11. The method according to claim 1, wherein the first parameter comprises the quantity of aggregated time-domain resource units, and the quantity of symbols that are in the aggregated time-domain resources and to which the reference signal is mapped; and

the determining configuration information of a reference signal based on a first parameter comprises:

determining, based on the quantity of aggregated time-domain resource units, and the quantity of symbols that are in the aggregated time-domain resources and to which the reference signal is mapped, an index of a time-domain symbol that is in the aggregated time-domain resource units and to which the reference signal is mapped, wherein the configuration information comprises the index of the time-domain symbol to which the reference signal is mapped, and optionally,

wherein the method further comprises:

sending the reference signal in the time-domain symbol corresponding to the index of the time-domain symbol.

12. A reference signal configuration apparatus, comprising:

a determining module, configured to determine configuration information of a reference signal based on a first parameter, wherein the first parameter comprises at least one of a transmission feature, a subcarrier spacing, an operating band of the subcarrier spacing, system bandwidth, a quantity of aggregated time-domain resource units, and a quantity of symbols that are in aggregated time-domain resources and to which the reference signal is mapped; and

a generation module, configured to generate the reference signal based on the configuration information determined by the determining module,

wherein the first parameter comprises the transmission feature, and the transmission feature is determined based on a transmission identifier of the reference signal that is used to identify the transmission direction of the reference signal; and

the determining configuration information of a reference signal based on a first parameter comprises:

determining a base sequence of the reference signal based on the transmission feature,

wherein the determining a base sequence of the reference signal based on the transmission feature comprises:

determining an initialization value of the base sequence of the reference signal based on the transmission feature; and

the generating the reference signal based on the configuration information comprises:

generating the base sequence of the reference signal based on the initialization value of the base sequence of the reference signal

and wherein the initialization value of the base sequence of the reference signal is determined based on the following formula:

$$c_{\text{init}} = \left( \lfloor n_s / 2 \rfloor + 1 \right) \cdot \left( 2 n_{\text{ID}}^{(n_{\text{SCID}})} + 1 \right) \cdot 2^{16} + a n_{\text{SCID}} + b n_{TRID}$$

where $C_{init}$ represents the initialization value of the base sequence of the reference signal; $\alpha$ is a positive integer not less than 0 and not greater than 215; b is a positive integer not less than 1 and not greater than 215; $n_{TRID}$ represents a value corresponding to the transmission feature; $n_s$ represents a slot number, $n_{ID}^{(n_{SCID})}$ is a value configured by using higher layer signaling, or a cell identity ID, and $n_{SCID}$ is a value indicated by using control information.

13. The apparatus according to claim 12, wherein the apparatus is specifically configured to perform the method according to any of claims 1 to 11.

**Patentansprüche**

1. Referenzsignal-Konfigurationsverfahren, das Folgendes umfasst:

Bestimmen von Konfigurationsinformationen eines Referenzsignals auf der Grundlage eines ersten Parameters, wobei der erste Parameter ein Übertragungsmerkmal und/oder eine Unterträgerbeabstandung und/oder ein Betriebsband der Unterträgerbeabstandung und/oder eine Systembandbreite und/oder eine Anzahl von aggregierten Zeitbereich-Ressourceneinheiten und/oder eine Anzahl von Symbolen, die sich in aggregierten Zeitbereich-Ressourcen befinden und auf die das Referenzsignal abgebildet ist, umfasst; und
Erzeugen des Referenzsignals auf der Grundlage der Konfigurationsinformationen, wobei der erste Parameter das Übertragungsmerkmal umfasst und das Übertragungsmerkmal auf der Grundlage einer Übertragungskennung des Referenzsignals, die zum Identifizieren der Übertragungsrichtung des Referenzsignals verwendet wird, bestimmt wird; und
das Bestimmen von Konfigurationsinformationen eines Referenzsignals auf der Grundlage eines ersten Parameters Folgendes umfasst:
Bestimmen einer Basissequenz des Referenzsignals auf der Grundlage des Übertragungsmerkmals, wobei das Bestimmen einer Basissequenz des Referenzsignals auf der Grundlage des Übertragungsmerkmals Folgendes umfasst:

Bestimmen eines Initialisierungswerts der Basissequenz des Referenzsignals auf der Grundlage des Übertragungsmerkmals; und
das Erzeugen des Referenzsignals auf der Grundlage der Konfigurationsinformationen Folgendes umfasst:

Erzeugen der Basissequenz des Referenzsignals auf der Grundlage des Initialisierungswerts der Basissequenz des Referenzsignals,
und wobei der Initialisierungswert der Basissequenz des Referenzsignals auf der Grundlage der folgenden Formel bestimmt wird:

$$c_{init} = (\lfloor n_s/2 \rfloor + 1) \cdot \left(2n_{ID}^{(n_{SCID})} + 1\right) \cdot 2^{16} + an_{SCID} + bn_{TRID},$$

wobei $c_{init}$ den Initialisierungswert der Basissequenz des Referenzsignals repräsentiert;
a eine positive ganze Zahl nicht kleiner als 0 und nicht größer als 215 ist; b eine positive ganze Zahl nicht kleiner als 1 und nicht größer als 215 ist; $n_{TRID}$ einen Wert repräsentiert, der dem Übertragungmerkmal entspricht;
$n_s$ einer Schlitznummer entspricht, $n_{ID}^{(n_{SCID})}$ ein Wert ist, der unter Verwendung von Signalisierung höherer Ebene oder einer Zellenidentität ID konfiguriert wird, und $n_{SCID}$ ein Wert ist, der unter Verwendung von Steuerinformationen angegeben wird.

2. Verfahren nach Anspruch 1, wobei das Erzeugen des Referenzsignals auf der Grundlage der Konfigurationsinformationen Folgendes umfasst:
Erzeugen des Referenzsignals auf der Grundlage der Basissequenz des Referenzsignals.

3. Verfahren nach Anspruch 1, wobei der erste Parameter die Unterträgerbeabstandung und/oder das Betriebsband der Unterträgerbeabstandung umfasst und wobei die Unterträgerbeabstandung irgendeine von mindestens einer Unterträgerbeabstandung ist;

das Bestimmen von Konfigurationsinformationen eines Referenzsignals auf der Grundlage eines ersten Parameters Folgendes umfasst:

Bestimmen einer Orthogonal-Abdeckungscode-Abbildungsweise des Referenzsignals auf der Grundlage der Unterträgerbeabstandung und/oder des Betriebsbands der Unterträgerbeabstandung, wobei die Konfigurationsinformationen die Orthogonal-Abdeckungscode-Abbildungsweise des Referenzsignals umfassen; und wobei das Verfahren ferner Folgendes umfasst:

Abbilden, gemäß der Orthogonal-Abdeckungscode-Abbildungsweise des Referenzsignals, von Referenzsignalen unter Verwendung eines selben orthogonalen Abdeckungscodes auf Unterträger, die im Zeitbereich und im Frequenzbereich aufeinanderfolgen, um Senden durchzuführen; oder
Abbilden, gemäß der Orthogonal-Abdeckungscode-Abbildungsweise des Referenzsignals, von Referenzsignalen unter Verwendung eines selben orthogonalen Abdeckungscodes auf Unterträger, die im Zeitbereich und im Frequenzbereich nicht aufeinanderfolgen, um Senden durchzuführen

4. Verfahren nach Anspruch 1, wobei der erste Parameter die Unterträgerbeabstandung und/oder das Betriebsband der Unterträgerbeabstandung umfasst; und

das Bestimmen von Konfigurationsinformationen eines Referenzsignals auf der Grundlage eines ersten Parameters Folgendes umfasst:
Bestimmen einer Orthogonal-Abdeckungscode-Länge des Referenzsignals auf der Grundlage der Unterträgerbeabstandung und/oder des Betriebsbands der Unterträgerbeabstandung, wobei die Konfigurationsinformationen die Orthogonal-Abdeckungscode-Länge des Referenzsignals umfassen.

5. Verfahren nach Anspruch 1, wobei der erste Parameter ferner eine Übertragungsbandbreite der Unterträgerbeabstandung und/oder eine Startfrequenz der Übertragungsbandbreite der Unterträgerbeabstandung umfasst; und wobei die Übertragungsbandbreite der Unterträgerbeabstandung eine maximal verfügbare Bandbreite der Unterträgerbeabstandung repräsentiert.

6. Verfahren nach Anspruch 5, wobei der erste Parameter eine zum Übertragen des Referenzsignals verwendete Unterträgerbeabstandung und/oder ein Betriebsband der Unterträgerbeabstandung und/oder die Systembandbreite und/oder eine Übertragungsbandbreite der Unterträgerbeabstandung und/oder eine Startfrequenz der Übertragungsbandbreite der Unterträgerbeabstandung umfasst; und

das Bestimmen von Konfigurationsinformationen eines Referenzsignals auf der Grundlage eines ersten Parameters Folgendes umfasst:
Bestimmen von Abbildungsinformationen des Referenzsignals auf der Grundlage des ersten Parameters, wobei die Abbildungsinformationen einen Maximalwert einer Anzahl von Ressourcenblöcken des Referenzsignals und/oder eine Nummer eines Ressourcenblocks, auf den das Referenzsignal während Ressourcenabbildens abgebildet wird, und/oder ein Verhältnis einer Gesamtlänge der Basissequenz des Referenzsignals zu dem Maximalwert der Anzahl von Ressourcenblöcken umfassen.

7. Verfahren nach Anspruch 6, wobei das Bestimmen von Abbildungsinformationen des Referenzsignals auf der Grundlage des ersten Parameters Folgendes umfasst:

Bestimmen des Maximalwerts der Anzahl von Ressourcenblöcken auf der Grundlage der Unterträgerbeabstandung und der Übertragungsbandbreite der Unterträgerbeabstandung, wobei die Abbildungsinformationen den Maximalwert der Anzahl von Ressourcenblöcken umfassen; oder
Bestimmen des Maximalwerts der Anzahl von Ressourcenblöcken auf der Grundlage der Unterträgerbeabstandung und der Systembandbreite, wobei die Abbildungsinformationen den Maximalwert der Anzahl von Ressourcenblöcken umfassen.

8. Verfahren nach Anspruch 6, wobei das Bestimmen von Abbildungsinformationen des Referenzsignals auf der Grundlage des ersten Parameters Folgendes umfasst:

Bestimmen, auf der Grundlage der Unterträgerbeabstandung und der Startfrequenz der Übertragungsbandbreite der Unterträgerbeabstandung, der Nummer des Ressourcenblocks, auf den das Referenzsignal während einer Ressourcenabbildung abgebildet wird; oder

Bestimmen, auf der Grundlage der Unterträgerbeabstandung und des Betriebsbands der Unterträgerbeabstandung, der Nummer des Ressourcenblocks, auf den das Referenzsignal während einer Ressourcenabbildung abgebildet wird, wobei die Abbildungsinformationen die Nummer des Ressourcenblocks, auf den das Referenzsignal während einer Ressourcenabbildung abgebildet wird, umfassen.

9. Verfahren nach Anspruch 6, wobei das Bestimmen von Abbildungsinformationen des Referenzsignals auf der Grundlage des ersten Parameters Folgendes umfasst:

Bestimmen des Verhältnisses der Gesamtlänge der Basissequenz des Referenzsignals zu dem Maximalwert der Anzahl von Ressourcenblöcken auf der Grundlage der Unterträgerbeabstandung und/oder des Betriebsbands der Unterträgerbeabstandung, wobei die Abbildungsinformationen das Verhältnis der Gesamtlänge der Basissequenz des Referenzsignals zu dem Maximalwert der Anzahl von Ressourcenblöcken umfassen, und optional,
wobei das Bestimmen des Verhältnisses der Gesamtlänge der Basissequenz des Referenzsignals zu dem Maximalwert der Anzahl von Ressourcenblöcken Folgendes umfasst:

wenn die Unterträgerbeabstandung größer oder gleich einer ersten Schwelle ist, Bestimmen eines ersten Verhältnisses, wobei das erste Verhältnis das Verhältnis der Gesamtlänge der Basissequenz des Referenzsignals zu dem Maximalwert der Anzahl von Ressourcenblöcken ist; oder
wenn die Unterträgerbeabstandung kleiner als die erste Schwelle ist, Bestimmen eines zweiten Verhältnisses, wobei das zweite Verhältnis das Verhältnis der Gesamtlänge der Basissequenz des Referenzsignals zu dem Maximalwert der Anzahl von Ressourcenblöcken ist und wobei sich das erste Verhältnis von dem zweiten Verhältnis unterscheidet.

10. Verfahren nach Anspruch 1, wobei der erste Parameter die Anzahl von aggregierten Zeitbereich-Ressourceneinheiten umfasst; und
das Bestimmen von Konfigurationsinformationen eines Referenzsignals auf der Grundlage eines ersten Parameters Folgendes umfasst:

Bestimmen, auf der Grundlage der Anzahl von aggregierten Zeitbereich-Ressourceneinheiten, eines Index eines Zeitbereichssymbols, das sich in den Zeitbereich-Ressourceneinheiten befindet und auf das das Referenzsignal abgebildet ist, wobei die Konfigurationsinformationen den Index des Zeitbereichssymbols, auf das das Referenzsignal abgebildet ist, umfassen, und optional,
wobei das Verfahren ferner Folgendes umfasst:
Senden des Referenzsignals in dem Zeitbereichssymbol, das dem Index des Zeitbereichssymbols entspricht.

11. Verfahren nach Anspruch 1, wobei der erste Parameter die Anzahl von aggregierten Zeitbereich-Ressourceneinheiten und die Anzahl von Symbolen, die sich in den aggregierten Zeitbereich-Ressourcen befinden und auf die das Referenzsignal abgebildet ist, umfasst; und
das Bestimmen von Konfigurationsinformationen eines Referenzsignals auf der Grundlage eines ersten Parameters Folgendes umfasst:

Bestimmen, auf der Grundlage der Anzahl von aggregierten Zeitbereich-Ressourceneinheiten und der Anzahl von Symbolen, die sich in den aggregierten Zeitbereich-Ressourcen befinden und auf die das Referenzsignal abgebildet ist, eines Index eines Zeitbereichssymbols, das sich in den aggregierten Zeitbereich-Ressourceneinheiten befindet und auf das das Referenzsignal abgebildet ist, wobei die Konfigurationsinformationen den Index des Zeitbereichssymbols, auf das das Referenzsignal abgebildet ist, umfassen, und optional,
wobei das Verfahren ferner Folgendes umfasst:
Senden des Referenzsignals in dem Zeitbereichssymbol, das dem Index des Zeitbereichssymbols entspricht.

12. Referenzsignal-Konfigurationseinrichtung, die Folgendes umfasst:

ein Bestimmungsmodul, ausgelegt zum Bestimmen von Konfigurationsinformationen eines Referenzsignals auf der Grundlage eines ersten Parameters, wobei der erste Parameter ein Übertragungsmerkmal und/oder eine Unterträgerbeabstandung und/oder ein Betriebsband der Unterträgerbeabstandung und/oder eine Systembandbreite und/oder eine Anzahl von aggregierten Zeitbereich-Ressourceneinheiten und/oder eine Anzahl von Symbolen, die sich in aggregierten Zeitbereich-Ressourcen befinden und auf die das Referenzsignal abgebildet ist, umfasst; und

ein Erzeugungsmodul, ausgelegt zum Erzeugen des Referenzsignals auf der Grundlage der Konfigurationsinformationen, die durch das Bestimmungsmodul bestimmt werden,

wobei der erste Parameter das Übertragungsmerkmal umfasst und das Übertragungsmerkmal auf der Grundlage einer Übertragungskennung des Referenzsignals, die zum Identifizieren der Übertragungsrichtung des Referenzsignals verwendet wird, bestimmt wird; und

das Bestimmen von Konfigurationsinformationen eines Referenzsignals auf der Grundlage eines ersten Parameters Folgendes umfasst:

Bestimmen einer Basissequenz des Referenzsignals auf der Grundlage des Übertragungsmerkmals, wobei das Bestimmen einer Basissequenz des Referenzsignals auf der Grundlage des Übertragungsmerkmals Folgendes umfasst:

Bestimmen eines Initialisierungswerts der Basissequenz des Referenzsignals auf der Grundlage des Übertragungsmerkmals; und

das Erzeugen des Referenzsignals auf der Grundlage der Konfigurationsinformationen Folgendes umfasst:

Erzeugen der Basissequenz des Referenzsignals auf der Grundlage des Initialisierungswerts der Basissequenz des Referenzsignals,

und wobei der Initialisierungswert der Basissequenz des Referenzsignals auf der Grundlage der folgenden Formel bestimmt wird:

$$c_{init} = (\lfloor n_s/2 \rfloor + 1) \cdot \left( 2n_{ID}^{(n_{SCID})} + 1 \right) \cdot 2^{16} + an_{SCID} + bn_{TRID},$$

wobei $c_{init}$ den Initialisierungswert der Basissequenz des Referenzsignals repräsentiert; $a$ eine positive ganze Zahl nicht kleiner als 0 und nicht größer als 215 ist; b eine positive ganze Zahl nicht kleiner als 1 und nicht größer als 215 ist; $n_{TRID}$ einen Wert repräsentiert, der dem Übertragungsmerkmal entspricht; $n_s$ einer Schlitznummer entspricht, $n_{ID}^{(n_{SCID})}$ ein Wert ist, der unter Verwendung von Signalisierung höherer Ebene oder einer Zellenidentität ID konfiguriert wird, und $n_{SCID}$ ein Wert ist, der unter Verwendung von Steuerinformationen angegeben wird.

13. Einrichtung nach Anspruch 12, wobei die Einrichtung insbesondere ausgelegt ist zum Durchführen des Verfahrens nach einem der Ansprüche 1 bis 11.

**Revendications**

1. Procédé de configuration de signal de référence, comprenant de :

déterminer des informations de configuration d'un signal de référence sur la base d'un premier paramètre, dans lequel le premier paramètre comprend au moins l'un d'une caractéristique de transmission, d'un espacement des sous-porteuses, d'une bande de fonctionnement de l'espacement des sous-porteuses, d'une largeur de bande du système, d'une quantité d'unités de ressources de domaine temporel agrégées, et d'une quantité de symboles qui sont dans des ressources de domaine temporel agrégées et auxquels le signal de référence est mappé ; et

générer le signal de référence sur la base des informations de configuration,

dans lequel le premier paramètre comprend la caractéristique de transmission, et la caractéristique de transmission est déterminée sur la base d'un identifiant de transmission du signal de référence qui est utilisé pour identifier la direction de transmission du signal de référence ; et

la détermination des informations de configuration d'un signal de référence sur la base d'un premier paramètre comprend de :

déterminer une séquence de base du signal de référence sur la base de la caractéristique de transmission, dans lequel la détermination d'une séquence de base du signal de référence sur la base de la caractéristique de transmission comprend de :

déterminer une valeur d'initialisation de la séquence de base du signal de référence sur la base de la caractéristique de transmission ; et

la génération du signal de référence sur la base des informations de configuration comprend de :

générer la séquence de base du signal de référence sur la base de la valeur d'initialisation de la séquence de base du signal de référence,

et dans lequel la valeur d'initialisation de la séquence de base du signal de référence est déterminée sur la base de la formule suivante :

$$c_{\text{init}} = \left(\lfloor n_s / 2 \rfloor + 1\right) \cdot \left(2n_{\text{ID}}^{(n_{\text{SCID}})} + 1\right) \cdot 2^{16} + an_{\text{SCID}} + bn_{TRID}$$

où $C_{init}$ représente la valeur d'initialisation de la séquence de base du signal de référence ; $\alpha$ est un nombre entier positif non inférieur à 0 et non supérieur à 215 ; b est un nombre entier positif non inférieur à 1 et non supérieur à 215 ; $n_{TRID}$ représente une valeur correspondant à la caractéristique de transmission ; $n_s$ représente un numéro d'intervalle de temps, $n_{\text{ID}}^{(n_{\text{SCID}})}$ est une valeur configurée en utilisant la signalisation de couche supérieure, ou un ID d'identité de cellule, et $n_{\text{SCID}}$ est une valeur indiquée en utilisant des informations de commande.

2. Procédé selon la revendication 1, dans lequel la génération du signal de référence sur la base des informations de configuration comprend de :
générer le signal de référence sur la base de la séquence de base du signal de référence.

3. Procédé selon la revendication 1, dans lequel le premier paramètre comprend au moins l'un de l'espacement des sous-porteuses et de la bande de fonctionnement de l'espacement des sous-porteuses, et l'espacement des sous-porteuses est l'un quelconque d'au moins un espacement des sous-porteuses ;
la détermination des informations de configuration d'un signal de référence sur la base d'un premier paramètre comprend de :

déterminer une manière de mappage de code de couverture orthogonal du signal de référence sur la base d'au moins l'un de l'espacement des sous-porteuses et de la bande de fonctionnement de l'espacement des sous-porteuses, dans lequel les informations de configuration comprennent la manière de mappage de code de couverture orthogonal du signal de référence ; et
le procédé comprend en outre de :

mapper, en fonction de la manière de mappage de code de couverture orthogonal du signal de référence, des signaux de référence en utilisant un même code de couverture orthogonal pour des sous-porteuses qui sont consécutives dans le domaine temporel et le domaine fréquentiel, pour effectuer l'envoi ; ou
mapper, en fonction de la manière de mappage de code de couverture orthogonal du signal de référence, des signaux de référence en utilisant un même code de couverture orthogonal pour des sous-porteuses qui sont non-consécutives dans le domaine temporel et le domaine fréquentiel, pour effectuer l'envoi.

4. Procédé selon la revendication 1, dans lequel le premier paramètre comprend au moins l'un de l'espacement des sous-porteuses et de la bande de fonctionnement de l'espacement des sous-porteuses ; et
la détermination des informations de configuration d'un signal de référence sur la base d'un premier paramètre comprend de :
déterminer une longueur de code de couverture orthogonale du signal de référence sur la base d'au moins l'un de l'espacement des sous-porteuses et de la bande de fonctionnement de l'espacement des sous-porteuses, dans lequel les informations de configuration comprennent la longueur de code de couverture orthogonal du signal de référence.

5. Procédé selon la revendication 1, dans lequel le premier paramètre comprend en outre au moins l'une d'une largeur de bande de transmission de l'espacement des sous-porteuses et d'une fréquence de départ de la largeur de bande de transmission de l'espacement des sous-porteuses; et la largeur de bande de transmission de l'espacement des sous-porteuses représente la largeur de bande maximale disponible de l'espacement des sous-porteuses.

6. Procédé selon la revendication 5, dans lequel le premier paramètre comprend au moins l'un d'un espacement des sous-porteuses utilisé pour transmettre le signal de référence, d'une bande de fonctionnement de l'espacement des sous-porteuses, de la largeur de bande du système, de la largeur de bande de transmission de l'espacement des sous-porteuses, et d'une fréquence de départ de la largeur de bande de transmission de l'espacement des sous-porteuses; et

la détermination des informations de configuration d'un signal de référence sur la base d'un premier paramètre comprend de :

déterminer des informations de mappage du signal de référence sur la base du premier paramètre, dans lequel les informations de mappage comprennent au moins l'un d'une valeur maximale d'une quantité de blocs de ressources du signal de référence, d'un numéro d'un bloc de ressources auquel le signal de référence est mappé pendant le mappage des ressources, et d'un rapport entre une longueur totale de la séquence de base du signal de référence et la valeur maximale de la quantité de blocs de ressources.

7. Procédé selon la revendication 6, dans lequel la détermination des informations de mappage du signal de référence sur la base du premier paramètre comprend de :

déterminer la valeur maximale de la quantité de blocs de ressources sur la base de l'espacement des sous-porteuses et de la largeur de bande de transmission de l'espacement des sous-porteuses, dans lequel les informations de mappage comprennent la valeur maximale de la quantité de blocs de ressources ; ou

déterminer la valeur maximale de la quantité de blocs de ressources sur la base de l'espacement des sous-porteuses et de la largeur de bande du système, dans lequel les informations de mappage comprennent la valeur maximale de la quantité de blocs de ressources.

8. Procédé selon la revendication 6, dans lequel la détermination des informations de mappage du signal de référence sur la base du premier paramètre comprend de :

déterminer, sur la base de l'espacement des sous-porteuses et de la fréquence de départ de la largeur de bande de transmission de l'espacement des sous-porteuses, le numéro du bloc de ressources auquel le signal de référence est mappé pendant le mappage des ressources ; ou

déterminer, sur la base de l'espacement des sous-porteuses et de la bande de fonctionnement de l'espacement des sous-porteuses, le numéro du bloc de ressources auquel le signal de référence est mappé pendant le mappage des ressources, dans lequel les informations de mappage comprennent le numéro du bloc de ressources auquel le signal de référence est mappé pendant le mappage des ressources.

9. Procédé selon la revendication 6, dans lequel la détermination des informations de mappage du signal de référence sur la base du premier paramètre comprend de :

déterminer le rapport entre la longueur totale de la séquence de base du signal de référence et la valeur maximale de la quantité de blocs de ressources sur la base d'au moins l'un de l'espacement des sous-porteuses et de la bande de fonctionnement de l'espacement des sous-porteuses, dans lequel les informations de mappage comprennent le rapport entre la longueur totale de la séquence de base du signal de référence et la valeur maximale de la quantité de blocs de ressources, et facultativement,

dans lequel la détermination du rapport entre la longueur totale de la séquence de base du signal de référence et la valeur maximale de la quantité de blocs de ressources comprend de :

lorsque l'espacement des sous-porteuses est supérieur ou égal à un premier seuil, déterminer un premier rapport, dans lequel le premier rapport est le rapport entre la longueur totale de la séquence de base du signal de référence et la valeur maximale de la quantité de blocs de ressources ; ou

lorsque l'espacement des sous-porteuses est inférieur au premier seuil, déterminer un second rapport, dans lequel le second rapport est le rapport entre la longueur totale de la séquence de base du signal de référence et la valeur maximale de la quantité de blocs de ressources, et le premier rapport est différent du second rapport.

10. Procédé selon la revendication 1, dans lequel le premier paramètre comprend la quantité d'unités de ressources du domaine temporel agrégées ; et

la détermination des informations de configuration d'un signal de référence sur la base d'un premier paramètre comprend de :

déterminer, sur la base de la quantité d'unités de ressources de domaine temporel agrégées, un indice d'un symbole de domaine temporel qui est dans les unités de ressources de domaine temporel agrégées et auquel le signal de référence est mappé, dans lequel les informations de configuration comprennent l'indice du symbole de domaine temporel auquel le signal de référence est mappé, et facultativement,

dans lequel le procédé comprend en outre de :

envoyer le signal de référence dans le symbole de domaine temporel correspondant à l'indice du symbole de domaine temporel.

11. Procédé selon la revendication 1, dans lequel le premier paramètre comprend la quantité d'unités de ressources de domaine temporel agrégées, et la quantité de symboles qui sont dans les ressources de domaine temporel agrégées et auxquels le signal de référence est mappé ; et

la détermination des informations de configuration d'un signal de référence sur la base d'un premier paramètre comprend de :

déterminer, sur la base de la quantité d'unités de ressources de domaine temporel agrégées, et de la quantité de symboles qui sont dans les ressources de domaine temporel agrégées et auxquels le signal de référence est mappé, un indice d'un symbole de domaine temporel qui est dans les unités de ressources de domaine temporel agrégées et auquel le signal de référence est mappé, dans lequel les informations de configuration comprennent l'indice du symbole de domaine temporel auquel le signal de référence est mappé, et facultativement,

dans lequel le procédé comprend en outre de :

envoyer le signal de référence dans le symbole de domaine temporel correspondant à l'indice du symbole de domaine temporel.

12. Appareil de configuration de signal de référence, comprenant :

un module de détermination, configuré pour déterminer des informations de configuration d'un signal de référence sur la base d'un premier paramètre, dans lequel le premier paramètre comprend au moins l'un d'une caractéristique de transmission, d'un espacement des sous-porteuses, d'une bande de fonctionnement de l'espacement des sous-porteuses, d'une largeur de bande du système, d'une quantité d'unités de ressources de domaine temporel agrégées, et d'une quantité de symboles qui sont dans des ressources de domaine temporel agrégées et auxquels le signal de référence est mappé ; et

un module de génération, configuré pour générer le signal de référence sur la base des informations de configuration déterminées par le module de détermination,

dans lequel le premier paramètre comprend la caractéristique de transmission, et la caractéristique de transmission est déterminée sur la base d'un identifiant de transmission du signal de référence qui est utilisé pour identifier la direction de transmission du signal de référence ; et

la détermination des informations de configuration d'un signal de référence sur la base d'un premier paramètre comprend de :

déterminer une séquence de base du signal de référence sur la base de la caractéristique de transmission,

dans lequel la détermination d'une séquence de base du signal de référence sur la base de la caractéristique de transmission comprend de :

déterminer une valeur d'initialisation de la séquence de base du signal de référence sur la base de la caractéristique de transmission ; et

la génération du signal de référence sur la base des informations de configuration comprend de :

générer la séquence de base du signal de référence sur la base de la valeur d'initialisation de la séquence de base du signal de référence,

et dans lequel la valeur d'initialisation de la séquence de base du signal de référence est déterminée sur la base de la formule suivante :

$$c_{\mathrm{init}} = \left(\lfloor n_s/2 \rfloor + 1\right) \cdot \left(2 n_{\mathrm{ID}}^{(n_{\mathrm{SCID}})} + 1\right) \cdot 2^{16} + a n_{\mathrm{SCID}} + b n_{\mathit{TRID}}$$

où $c_{\mathrm{init}}$ représente la valeur d'initialisation de la séquence de base du signal de référence ; $\alpha$ est un nombre entier positif non inférieur à 0 et non supérieur à 215 ; b est un nombre entier positif non inférieur à 1 et non supérieur à 215 ; $n_{\mathrm{TRID}}$ représente une valeur correspondant à la caractéristique de transmission ; $n_s$ représente

un numéro d'intervalle de temps, $n_{\mathrm{ID}}^{(n_{\mathrm{SCID}})}$ est une valeur configurée en utilisant la signalisation de couche supérieure, ou un ID d'identité de cellule, et $n_{\mathrm{SCID}}$ est une valeur indiquée en utilisant des informations de commande.

13. Appareil selon la revendication 12, dans lequel l'appareil est spécifiquement configuré pour exécuter le procédé selon l'une quelconque des revendications 1 à 11.

FIG. 1

200

Determine configuration information of a reference signal based on a first parameter, where the first parameter includes at least one of a transmission feature, a subcarrier spacing, an operation band of the subcarrier spacing, system bandwidth, a quantity of aggregated time-domain resource units, and a quantity of symbols of the reference signal that are mapped to an aggregated time-domain resource ⟿ S210

Generate the reference signal based on the configuration information ⟿ S220

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610959468

**Non-patent literature cited in the description**

- **ERICSSON et al.** Flexible DM-RS Configuration for Dynamic Inter-Point Coordination. *3GGP R1-120787,* 01 February 2012